# EUROPÄISCHE PATENTSCHRIFT

(11) **EP 2 581 004 B1**
(45) Veröffentlichungstag und Bekanntmachung des Hinweises auf die Patenterteilung: **13.05.2015**
(21) Anmeldenummer: 12182673.9
(22) Anmeldetag: 31.08.2012
(51) Int. Cl.: A47J 39/00, A47B 31/02

(54) **Vorrichtung zum Regenerieren von Speisen**
Device for regenerating meals
Dispositif de régénération de plats

(30) Priorität: 14.10.2011 DE 102011054513
(43) Veröffentlichungstag der Anmeldung: 17.04.2013
(73) Patentinhaber: HUPFER Metallwerke GmbH & Co. KG, 48653 Coesfeld (DE)
(72) Erfinder: Schumacher, Helmut, Dipl.-Ing., 48653 Coesfeld (DE)
(74) Vertreter: Albrecht, Rainer Harald

(56) Entgegenhaltungen:
- EP-A1- 2 123 191
- EP-B1- 1 116 465
- DE-B3-102009 051 162
- US-A- 3 222 114

## Beschreibung

Die Erfindung betrifft eine Vorrichtung zum Regenerieren von Speisen, die auf Tabletts in einem Tabletttransportwagen bereitgestellt werden.

Der grundsätzliche Aufbau der Vorrichtung umfasst einen Rahmen, mehrere übereinander angeordnete Heizplatten mit Induktionsspulen und eine Kühleinrichtung, die eine Kühlfläche und ein Kühlluftgebläse aufweist. Die Heizplatten sind rückseitig an einen im Rahmen vertikal verstellbar angeordneten Heizplattenträger angeschlossen und mittels einer Hubbewegung des Heizplattenträgers gegen die Unterseite der Tabletts eines an die Vorrichtung angedockten Tabletttransportwagens bewegbar.

Die Vorrichtung eignet sich zur Verteilung von Speisen, die nach dem sogenannten Cook and Chill-Verfahren nach ihrer Zubereitung schnell abgekühlt werden und vor ihrer Verteilung an Essensteilnehmer auf Verzehrtemperatur erwärmt werden. Die Speisen werden auf Tabletts in Transportwagen bereitgestellt. Nachdem der Tabletttransportwagen an die Vorrichtung angedockt worden ist, werden die Heizplatten mittels einer Hubbewegung des Heizplattenträges angehoben und an die Unterseite der Tabletts angelegt. Die Heizplatten weisen Induktionsspulen zur induktiven Erwärmung der auf den Tabletts bereitgestellten Speisen auf. Neben den zu erwärmenden Speisen befinden sich auf den Tabletts in der Regel auch Kaltspeisen bzw. kühl zu haltende Speisen. Diese werden in Schälchen oder Bechern portioniert, die sich nicht induktiv erwärmen lassen, so dass die Erwärmung auf die zu erwärmende Speisen beschränkt wird.

Die auf den Tabletts bereitgestellten Speisen können bis zu ihrer Regenerierung durch Beaufschlagung mit Kühlluft kühl gehalten werden. Während der induktiven Erwärmung wird die Kühlung in der Praxis abgeschaltet. Sie wird nicht benötigt, da die induktive Erwärmung durch die Anordnung der Induktionsspulen und die auf die Induktionsspulen abgestimmten Geschirrkomponenten auf die zu erwärmenden Speisen konzentriert werden kann und die Wärmeabgabe an die Umgebung gering ist. Dennoch kann nicht verhindert werden, dass Kaltspeisen, die zusammen mit den zu erwärmenden Speisen auf den Tabletts bereitgestellt werden, sich mit einem Temperaturanstieg von weniger als 0,2° C pro Minute langsam erwärmen. Bei einer durchschnittlichen Regenerierzeit von 20 bis 40 Minuten erwärmen sich die Kaltspeisen um einige Grad Celsius. Im Anschluss an die Regenerierung müssen die Speisen daher zügig verteilt werden, um sicherzustellen, dass die Kaltspeisen keinen zulässigen Temperaturgrenzwert überschreiten. Hinzu kommt das Problem, dass die Kaltspeisen manchmal bereits eine Temperatur aufweisen können, die höher ist als die Kühlhaustemperatur, wenn der Transportwagen zum Zwecke einer Regenerierung der Speisen an die Vorrichtung angedockt wird. Während der Regenerierung können sich die Kaltspeisen weiter erwärmen, so dass die Gefahr besteht, dass die Kaltspeisen bei der Essensverteilung eine kritische Temperatur erreichen. Eine Kühlung des gesamten Raumes des Tabletttransportwagens während der Regenerierung ist aus mehreren Gründen nachteilig. Zum einen ist eine Kühlung der zu erwärmenden Speisen während der Regenerierungsphase energetisch ungünstig und führt zu einer Verlängerung der Regenerierzeit. Ferner besteht die Gefahr, dass sich an den Geschirrkomponenten im Umgebungsbereich der zu erwärmenden Speisen Kondensat niederschlägt, wenn die Geschirrteile während der induktiven Erwärmung der Speisen durch Beaufschlagung, mit Kühlluft gekühlt werden. Die Kondensatbildung an Geschirrteilen der erwärmten Speisen wird als Qualitätsmangel wahrgenommen.

Aus EP 1 116 465 B1 ist eine Vorrichtung mit den eingangs beschriebenen Merkmalen bekannt. Der Heizplattenträger weist eine Rückwand auf, welche den angedockten Transportwagen auf der Andockseite verschließt. Die Rückwand des Heizplattenträgers enthält über die Fläche verteilte Kühlluftöffnungen, aus denen Kühlluft ausströmt. Die austretende Kühlluft streicht über die zu erwärmenden Speisen ebenso wie über die zu kühlenden Speisen.

Vor dem zuvor geschilderten Hintergrund liegt der Erfindung die Aufgabe zugrunde, eine Vorrichtung anzugeben, die während der induktiven Erwärmung von Speisen gleichzeitig eine wirksame Kühlung von kühl zu haltenden Speisen ermöglicht, die auf denselben Tabletts in einem Tabletttransportwagen bereitgestellt werden. Die Vorrichtung soll für Tabletttransportwagen geeignet sein, die lediglich seitliche Führungen für Tabletts aufweisen und deren Innenraum nicht durch eine zwischen diesen Führungen angeordnete Trennwand in eine Warmzone und eine Kaltzone unterteilt ist.

Gegenstand der Erfindung und Lösung dieser Aufgabe ist eine Vorrichtung nach Anspruch 1.

Erfindungsgemäß weist die Vorrichtung Trennstege auf, die rückseitig an einen vertikal verstellbar angeordneten Heizplattenträger angeschlossen sind und den Raum innerhalb eines an die Vorrichtung angedockten Tabletttransportwagens in eine Warmzone sowie eine Kühlzone trennen. In der Kühlzone sind Einrichtungen für die Zuführung und Rückführung von Kühlluft vorgesehen. Die Trennstege sind erfindungsgemäß Bestandteil der ortsfest aufgestellten Vorrichtung und unterteilen den Raum eines an der Vorrichtung bereitgestellten mobilen Tabletttransportwagens in eine Kühlzone und Warmzone. Erfindungsgemäß wird die Kühlluft nur der Kühlzone zugeführt und in der Kühlzone eine Kühlluftströmung erzeugt, die über die zu kühlenden Speisen streicht. Ein kleines Kühlluftgebläse mit geringer Leistungsaufnahme ist ausreichend, um die zu kühlenden Speisen vor und während der Regenerierung in einem definierten Temperaturniveau, z. B. bei einer Temperatur von etwa 4° C zu halten.

Gemäß einer bevorzugten Ausführung der Erfindung liegen die mit Induktionsspulen bestückten Heizplatten auf den Trennstegen auf. Abgesehen von ihrer thermischen Trennwirkung bilden die Trennstege bei dieser Ausgestaltung der erfindungsgemäßen Vorrichtung auch eine Unterkonstruktion der Heizplatten und verbessern die Stabilität der Heizplatten.

Die erfindungsgemäße Vorrichtung ermöglicht eine funktionsgerechte Regenerierung von Speisen auf Tabletts in einem Tabletttransportwagen, der keine konstruktiv aufwendige Unterteilung des Innenraums aufweist und darauf abgestimmte Tabletts benötigt. Tabletttransportwagen ohne Innenraumunterteilung sind in der Praxis in großer Zahl im Einsatz und werden vielseitig verwendet. Sie werden nach Bedarf mit unterschiedlichen Tabletts bestückt und können darüber hinaus auch zum Transport von Behältern genutzt werden.

Die Luftführung der erfindungsgemäßen Vorrichtung ist zweckmäßig so gestaltet, dass sich eine im Wesentlichen horizontale Kühlluftströmung über den in die Kühlzone vorstehenden Abschnitt der Tabletts einstellt.

Die Strömungsführung kann dadurch realisieret werden, dass die Einrichtungen für die Zuführung und Rückführung der Kühlluft an den Trennstegen und einer von dem Heizplattenträger gebildeten Rückwand angeordnet sind. Die Trennstege sind dann zweckmäßig als doppelwandige Elemente ausgebildet und bilden jeweils einen Strömungskanal für die Zuführung oder Rückführung der Kühlluft. An ihrem vorkragenden Ende weisen die doppelwandig ausgebildeten Trennstege mindestens eine Öffnung für die Zuführung oder Rückführung der Kühlluft auf. Zusätzlich oder alternativ können die doppelwandig ausgebildeten Trennstege auch entlang ihrer Längserstreckung mehrere Ansaugöffnungen oder Austrittsöffnungen für die Kühlluft aufweisen. Unter strömungstechnischen Aspekten ist es vorteilhaft, wenn der Strömungsraum der Trennstege mit der Druckseite des Kühlluftgebläses verbunden ist und für die Zuführung der Kühlluft genutzt wird. Durch Absaugöffnungen im Heizplattenträger wird die Kühlluft aus der Kühlzone abgesaugt und zum Kühlgebläse zurückgeführt. Im Bereich der Warmzone können zusätzlich Absaugöffnungen, z. B. in der von dem Heizplattenträger gebildeten Rückwand, vorgesehen sein, so dass ein Teilstrom der umgewälzten Kühlluft durch Spalte in die Warmzone übertritt und über die Absaugöffnung wieder dem Kühlluftkreislauf zugeführt wird. Ein durch Spalte in die Warmzone übertretender Kühlluft-Leckagestrom hat den Vorteil, dass die in der Warmzone bereitgestellten Speisen sich während der Wartezeit bis zur Regenerierung nicht erwärmen. Die Erfindung schließt nicht aus, dass auch ein Teil des Kühlluftstromes durch eine gezielte Luftzuführung in die Warmzone eingeleitet wird. Die erfindungsgemäße Anordnung ermöglicht es, einen etwaigen in die Warmzone eingeleiteten Kühlluftteilstrom so zu bemessen, dass die dort bereitgestellten Speisen während der Wartezeit bis zur Regenerierung ausreichend gekühlt werden und andererseits der Kühlluftstrom so klein ist, dass er den Regenerierprozess nicht nachteilig, z. B. durch Kondensatbildung an den Geschirrteilen, beeinflusst.

Der Heizplattenträger weist zweckmäßig Luftkanäle für die Zuführung und Rückführung der Kühlluft auf, wobei einer der Luftkanäle mit dem Strömungsraum der Trennstege in Fluidverbindung steht und ein zweiter Luftkanal durch Öffnungen in der von dem Heizplattenträger gebildeten Rückwand mit der Kühlzone verbunden ist. Sofern der zweite Luftkanal an die Saugseite des Kühlluftgebläses angeschlossen ist, können zusätzliche Absaugöffnungen in der Rückwand des Heizplattenträgers vorgesehen sein, die in die Warmzonen münden. Durch diese kann ein Kühlluft-Leckagestrom aus der Warmzone abgesaugt werden. Die thermische Trennwirkung der Trennstege kann durch diese Maßnahme noch verbessert werden.

Eine weitere Ausgestaltung der erfindungsgemäßen Vorrichtung sieht vor, dass die Einrichtungen für die Zuführung und Rückführung von Kühlluft in einer die Kühlzone begrenzenden Rückwand des Heizplattenträgers angeordnet sind, wobei die zugeführte Kühlluft ausgehend von der Luftzuführung an der Rückwand im Wesentlichen horizontal über den in der Kühlzone angeordneten Abschnitt der Tabletts nach vorne strömt und dort nach unten umgelenkt sowie der an der Rückwand angeordneten Einrichtung für die Kühlluftzufuhr wieder zugeführt wird. Vorzugsweise sind in einem oberen Abschnitt der Rückwand Öffnungen nur für die Zuführung der Kühlluft angeordnet und ist in einem unteren Abschnitt der Rückwand mindestens eine Ansaugöffnung mit Sauggebläse angeordnet. Das Sauggebläse ist so ausgelegt, dass sich eine schwache Kühlluftströmung ausbildet und die Kühlluft in einer laminaren Strömung über die auf dem Tablett bereitgestellten Speisen streicht. Eine Anzahl der auf mehreren Etagen bereitgestellten Tabletts wird von Kühlluftteilströmen überströmt, die durch die Öffnungen in der Rückwand des Heizplattenträgers austreten und nach vorne, das heißt in Richtung des freien Endes der Trennstege strömen. Eine vorzugsweise kleinere Anzahl der Tabletts kann mittels der zur Ansaugöffnung zurückströmenden Kühlluft gekühlt werden. Die in einem Tabletttransportwagen bereitgestellten Tabletts unterteilen die Kühlzone in mehrere horizontal durchströmte Lufträume bzw. Luftkammern. Die Umlenkung der Ströme erfolgt im Innern eines angedockten Tabletttransportwagens, wobei zwischen den Tabletts und der Innenwand des an der Vorrichtung positionierten Tabletttransportwagens ein Freiraum vorhanden sein muss. Ein schmaler Spalt zwischen der Innenwand des Tabletttransportwagens und dem Rand der benachbarten Tabletts ist ausreichend. Daher kann es vorteilhaft sein, wenn die Wandfläche des Tabletttransportwagens eine Einbuchtung aufweist, die der Kühlzone zugeordnet ist und sich im Innern des Tabletttransportwagens über alle Etagen, auf denen Tabletts abgelegt werden, erstreckt.

Die an die Kühlzone angrenzende Rückwand des Heizplattenträgers ist vorzugsweise abnehmbar und begrenzt getrennte Lufträume für eine Kühlluftzuführung und Kühlluftabführung. Nach Abnahme der Rückwand sind die Lufträume zugänglich und können vollständig gereinigt werden. Die in der Rückwand vorgesehenen Öffnungen für die Kühlluftzuführung sind vorzugsweise als rechteckförmige Fenster ausgebildet und weisen jeweils eine nach innen abgewinkelte Zunge auf, welche als Luftleitfläche Kühlluft aus dem rückseitigen Strömungsraum in die Kühlzone umlenkt. Die beschriebene Anordnung ermöglicht eine gleichmäßige Aufteilung der Kühlluft auf alle Ebenen, in denen Tabletts bereitgestellt werden. Die rechteckförmigen Fenster sind großflächig dimensioniert und erlauben eine im Wesentlichen druckverlustfreie Strömung. Vorzugsweise erfolgt die Kühlluftzuführung an der Rückseite des Heizplattenträgers in einer abwärtsgerichteten Strömung und sind die Zungen jeweils an den unteren Rand der fensterförmigen Öffnungen angeformt.

Die Abmessungen der Trennstege und der Stellhub des Heizplattenträgers sind zweckmäßig so aufeinander abgestimmt, dass der untere Rand der Trennstege in einen rinnenförmigen Abschnitt der Tabletts, der eine Tablettfläche für warme Speisen von einer Tablettfläche für gekühlte Speisen trennt, eintaucht. Zwischen dem unteren Rand der Trennstege und dem rinnenförmigen Abschnitt der Tabletts verbleibt ein labyrinthartiger Spalt. Die Spaltgeometrie leistet zur thermischen Trennwirkung der Anordnung einen weiteren Beitrag.

Die Trennstege weisen an ihrem unteren Rand vorzugsweise ein sich verjüngendes Querschnittsprofil auf. Durch das sich verjüngende Querschnittsprofil lässt sich die Vorrichtung auch in den Zwischenräumen zwischen den Trennstegen gut reinigen.

Unterhalb der Heizplattenanordnung kann an dem Heizplattenträger ein vorstehender Steg angeschlossen sein, der an seiner Unterseite eine Anlaufschräge aufweist. Wenn ein Tabletttransportwagen zum Einschieben in die Vorrichtung auf die Anlaufschräge trifft, wird der Heizplattenträger durch die Einschubbewegung des Tabletttransportwagens angehoben und werden dadurch die Heizplatten in Bezug auf das Niveau der Tabletts korrekt ausgerichtet. Eine Kollision von Heizplatten und Tabletts beim Einschieben des Transportwagens in die Vorrichtung ist dadurch ausgeschlossen.

Die von dem Heizplattenträger vorkragende Länge der Trennstege und der auf ihnen aufliegenden Heizplatten kann so bemessen werden, dass auf den Heizplatten zwei hintereinander angeordnete Tabletts Platz finden und darauf angeordnete Speisen gleichzeitig regeneriert werden können. Bei dieser Ausgestaltung der erfindungsgemäßen Vorrichtung können Tabletttransportwagen verwendet werden, auf deren Tablettführungen zwei Speisentabletts hintereinander angeordnet werden. Derartige Tabletttransportwagen sind in der Praxis weit verbreitet. In der Regel sind sowohl an der Front- als auch der Rückseite dieser Tabletttransportwagen Türen zur Tablettentnahme vorgesehen.

Im Folgenden wird die Erfindung anhand einer lediglich ein Ausführungsbeispiel darstellenden Zeichnung erläutert. Es zeigen schematisch:
- **Fig. 1**: in perspektivischer Darstellung eine Vorrichtung zum Regenerieren von Speisen, die auf Tabletts in einem (nicht dargestellten) Tabletttransportwagen bereitgestellt werden,
- **Fig. 2**: eine frontseitige Ansicht der in Fig. 1 dargestellten Vorrichtung mit einem an der Vorrichtung angedockten Tabletttransportwagen,
- **Fig. 3**: einen Ausschnitt aus Fig. 2 in einer gegenüber Fig. 2 vergrößerten Darstellung,
- **Fig. 4**: einen für die Vorrichtung geeigneten Tabletttransportwagen in einer perspektivischen Darstellung,
- **Fig. 5**: eine weitere Ausgestaltung der erfindungsgemäßen Vorrichtung in einer Fig. 1 vergleichbaren perspektivischen Darstellung,
- **Fig. 6**: eine frontseitige Ansicht der in Fig. 5 dargestellten Vorrichtung mit einem an der Vorrichtung angedockten Tabletttransportwagen,
- **Fig. 7**: eine perspektivische Darstellung mit einer Innenansicht des in Fig. 6 gezeigten Tabletttransportwagens,
- **Fig. 8**: einen Ausschnitt aus der Rückwand der in Fig. 5 dargestellten Vorrichtung,
- **Fig. 9**: ein Tablett für die in den Figuren dargestellten Anordnungen.

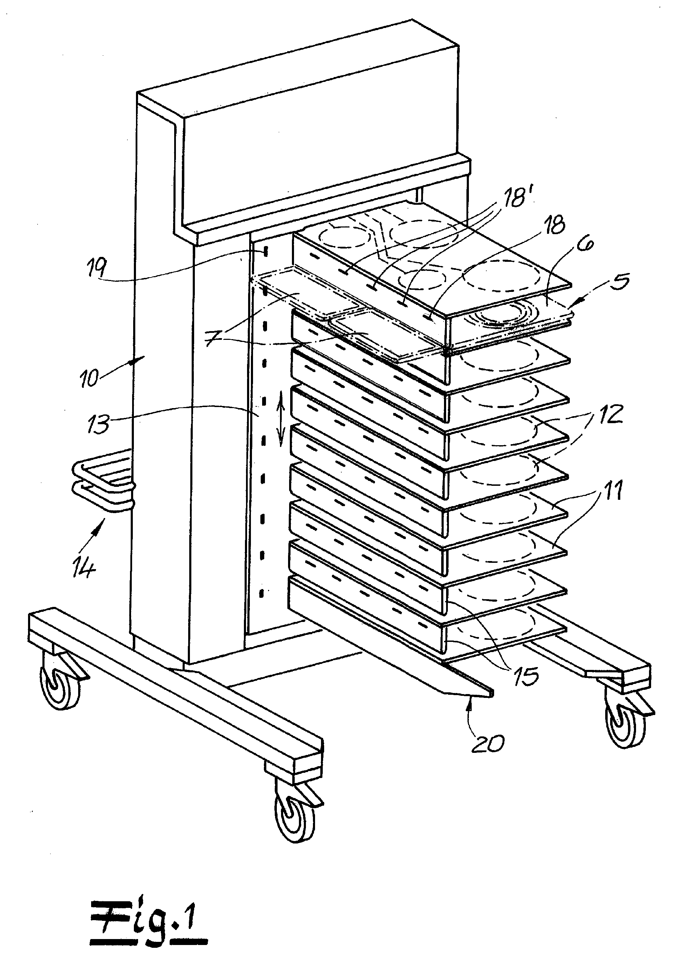

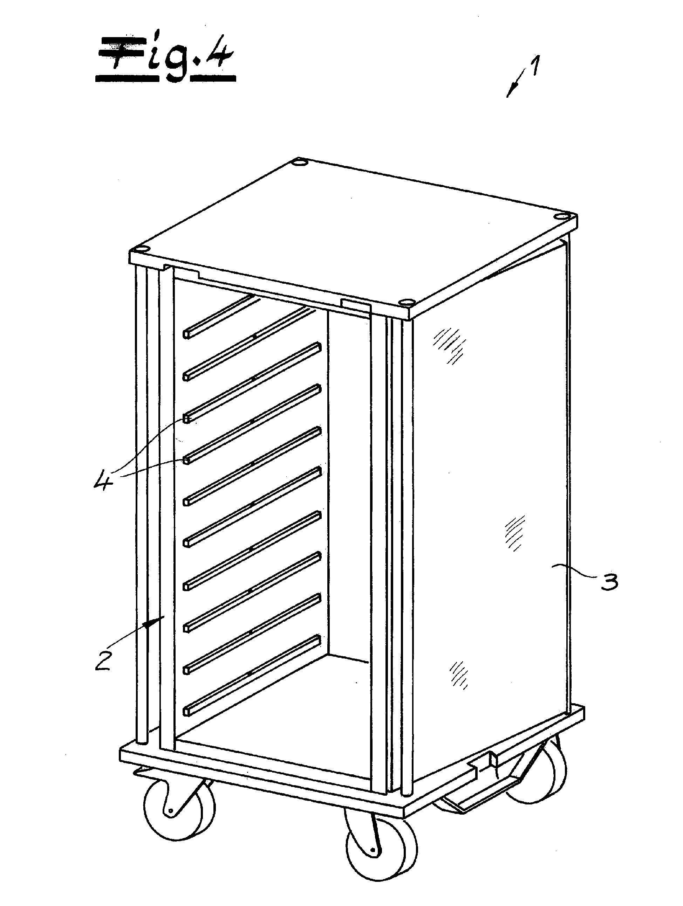

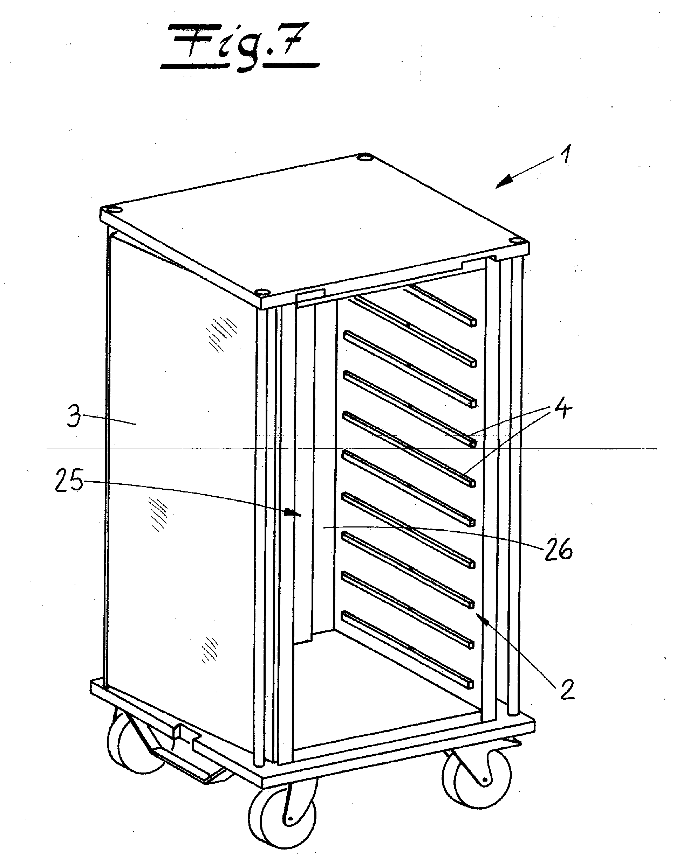

Die in den Fig. 1 und 2 sowie den Fig. 5 und 6 dargestellten Vorrichtungen dient zum Regenerieren von Speisen, die auf Tabletts in einem Tabletttransportwagen bereitgestellt werden. Gemäß den Darstellungen in den Fig. 4 und 7 weist der Tabletttransportwagen 1 ein auf Rollen verfahrbares Gehäuse 2 auf, das durch Türen an der Front- und Rückseite verschließbar ist. Die Fig. 4 und 7 zeigen den geöffneten Zustand des Transportwagens. Die Türflügel 3 liegen an den Seitenwänden des Transportwagens 1 an. An der Innenseite des Transportwagens 1 sind Schienen 4 für die Auflage von Tabletts 5 angeordnet. Die Länge dieser Schienen 4 ist so bemessen, dass in jeder Ebene zwei Tabletts 5 hintereinander bereitgestellt werden können.

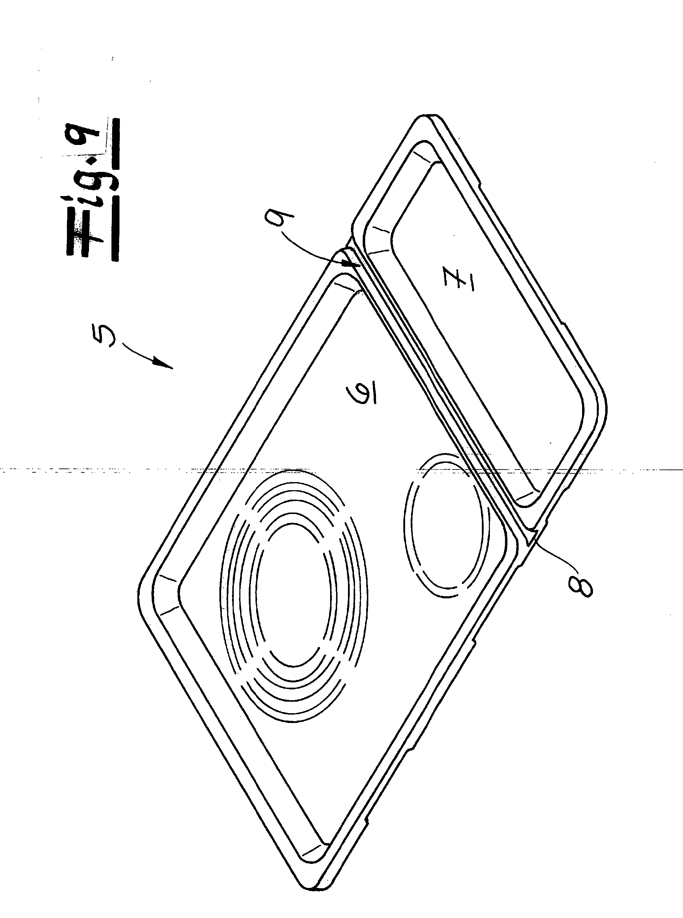

Der Tabletttransportwagen 1 ist mit Tabletts 5 bestückbar, die in Fig. 9 dargestellt sind. Gemäß der Darstellung in Fig. 9 weist das Tablett 5 eine Tablettfläche 6 für warme Speisen, beispielsweise zwei Warmspeisenzonen, sowie eine Tablettfläche 7 mit einer Kaltspeisenzone für gekühlte Speisen auf. Die beiden Tablettflächen 6, 7 sind durch einen Steg 8 verbunden, der an seiner Oberseite eine rinnenförmige Vertiefung 9 aufweist.

Die in Fig. 1 dargestellte Vorrichtung umfasst einen Rahmen 10 sowie mehrere übereinander angeordnete Heizplatten 11 mit Induktionsspulen 12. Die Heizplatten 11 sind rückseitig an einen im Rahmen 10 vertikal verstellbar angeordneten Heizplattenträger 13 angeschlossen und mittels einer Hubbewegung des Heizplattenträgers 13 gegen die Unterseite der Tabletts 5 eines an die Vorrichtung angedockten Tabletttransportwagens 1 bewegbar. An der Rückseite des Heizplattenträgers 13 ist eine Kühleinrichtung 14 vorgesehen, die eine nicht dargestellte Kühlfläche sowie ein ebenfalls nicht dargestelltes Kühlluftgebläse aufweist.

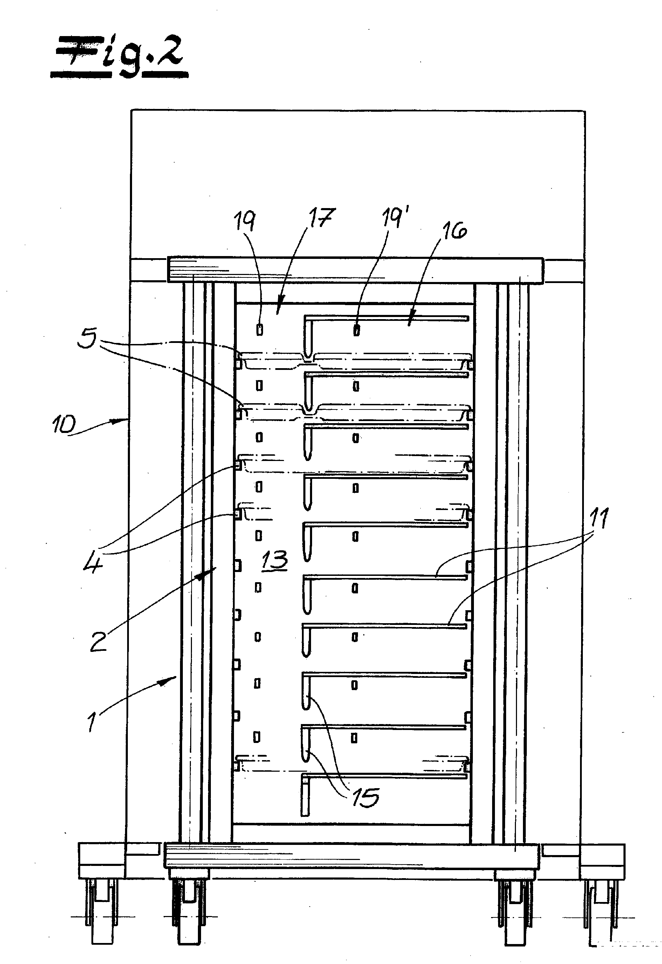

Aus einer vergleichenden Betrachtung der Fig. 1 und 2 geht hervor, dass die Heizplatten 11 der in Fig. 1 dargestellten Vorrichtung auf Trennstegen 15 aufliegen, die rückseitig an den Heizplattenträger 13 angeschlossen sind und den Raum innerhalb eines an die Vorrichtung angedockten Tabletttransportwagens 1 in eine Warmzone 16 sowie eine Kühlzone 17 trennen. In der Kühlzone 17 sind Einrichtungen 18, 19 für eine Zuführung und Rückführung der Kühlluft vorgesehen. Durch diese Einrichtungen 18, 19 wird eine im Wesentlichen horizontale Kühlluftströmung in Pfeilrichtung über den sich in die Kühlzone 17 erstreckenden Abschnitt der in einem Tabletttransportwagen 1 bereitgestellten Tabletts 5 erzeugt. Die Kühlluft wird der Kühlzone 17 durch Öffnungen 18 in den Trennstegen zugeführt und durch Öffnungen 19 in einer von dem Heizplattenträger 13 gebildeten Rückwand zurückgeführt.

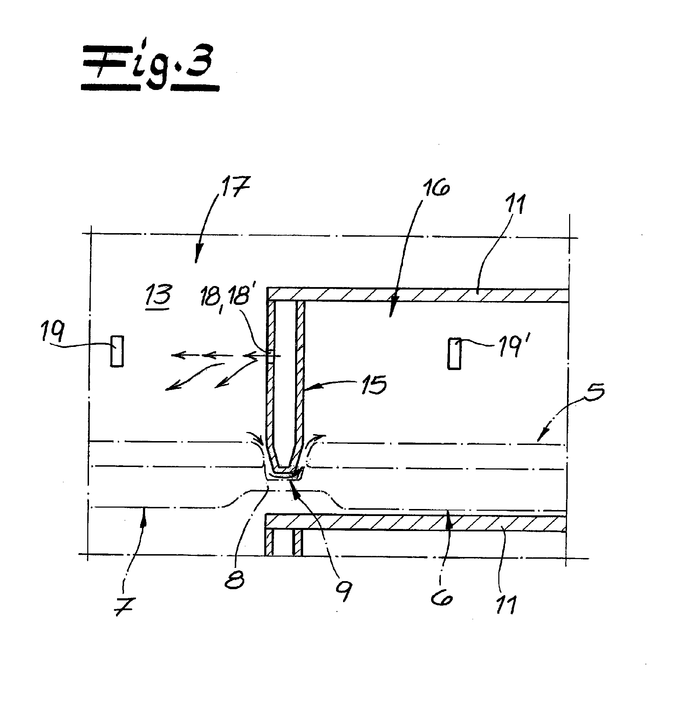

Aus einer vergleichenden Betrachtung der Fig. 1 bis 3 wird deutlich, dass die Trennstege 15 als doppelwandige Elemente ausgebildet sind und jeweils einen Strömungskanal für die Zuführung der Kühlluft bilden. An ihrem vorkragenden Ende weisen die doppelwandig ausgebildeten Trennstege 15 Austrittsöffnungen 18 für die Kühlluft auf. Zusätzlich können entlang der Längserstreckung weitere Austrittsöffnungen 18' für die Kühlluft vorgesehen sein.

Der Heizplattenträger 13 weist Luftkanäle für die Zuführ- und Rückführung von Kühlluft auf. Einer der Luftkanäle steht mit dem Strömungsraum der Trennstege 15 in Fluidverbindung und ist an die Druckseite des Kühlluftgebläses angeschlossen. Ein zweiter Luftkanal steht mit den im Heizplattenträger 13 angeordneten Ansaugöffnungen in Fluidverbindung und ist mit der Saugseite des Kühlluftgebläses verbunden.

Das Kühlluftgebläse erzeugt in der Kühlzone einen leichten Überdruck. Ein Kühlluftteilstrom strömt durch Spalten, die zwischen den Trennstegen 15 und den Tabletts 5 verbleiben, in die Warmzone und wird dort abgesaugt. Gemäß einer bevorzugten Ausführung der Erfindung enthält der Heizplattenträger 13 daher zusätzliche Absaugöffnungen 19', welche die Warmzone 16 mit dem zweiten Luftkanal verbinden.

Die Abmessungen der Trennstege 15 und der Stellhub des Heizplattenträger 13 sind so aufeinander abgestimmt, dass der untere Rand der Trennstege 15 in den rinnenförmigen Abschnitt 9 der Tabletts 5 eintaucht. Die Trennstege 15 weisen zweckmäßig an ihrem unteren Rand ein sich verjüngendes Querschnittsprofil auf.

Die von dem Heizplattenträger 13 vorkragende Länge der Trennstege 15 und der auf ihnen aufliegenden Heizplatten 11 sind so bemessen, dass auf den Heizplatten 11 zwei in einer Ebene hintereinander angeordneten Tabletts 5 Platz finden und darauf angeordnete Speisen gleichzeitig regeneriert werden können (Fig. 1). Der Darstellung in Fig. 1 entnimmt man schließlich auch, dass der an den Heizplattenträger 13 unterhalb der Heizplattenanordnung ein Steg angeschlossen ist, der an seiner Unterseite eine Anlaufschräge 20 aufweist. Wenn der Tabletttransportwagen beim Andocken an die Vorrichtung auf die Anlaufschräge 20 trifft, wird der Heizplattenträger 13 soweit angehoben, dass die Heizplatten 11 beim Andocken des Tabletttransportwagens 1 nicht mit den Tabletts 5 kollidieren.

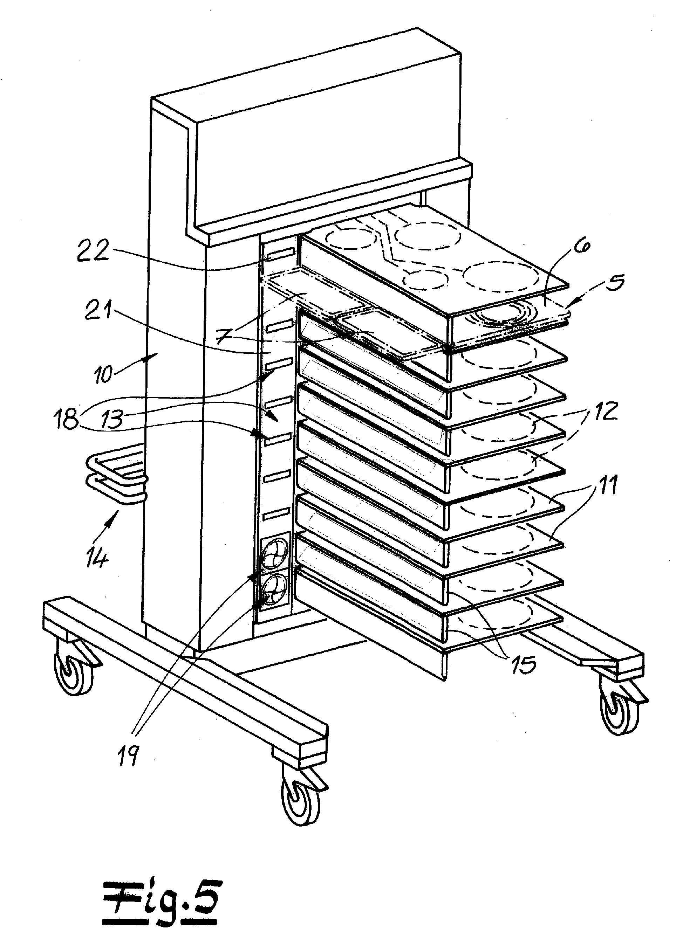

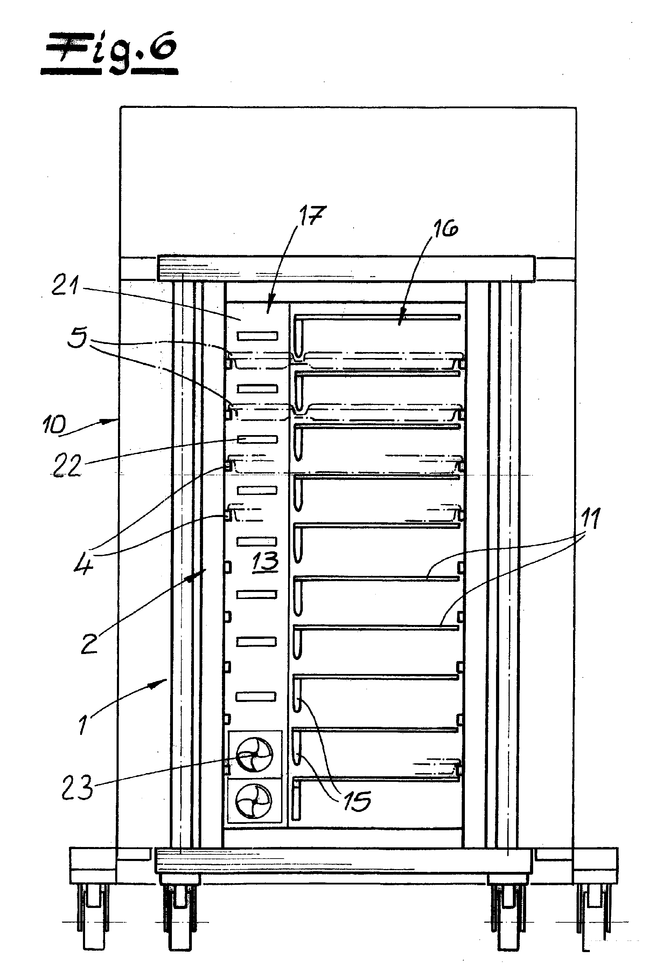

Bei der in den Fig. 5 und 6 dargestellten Ausführung der erfindungsgemäßen Vorrichtung sind die Einrichtungen 18, 19 für die Zuführung und Rückführung von Kühlluft in einer die Kühlzone 12 begrenzenden Rückwand 21 des Heizplattenträgers 13 angeordnet. Die Anordnung ist dabei so gewählt, dass die zugeführte Kühlluft ausgehend von der Luftzufuhr an der Rückwand 21 im Wesentlichen horizontal über den in der Kühlzone angeordneten Abschnitt der Tabletts 5 nach vorne strömt und dort nach unten umgelenkt sowie der an der Rückwand 21 angeordneten Einrichtung 19 für die Kühlluftrückführung wieder zugeführt wird. Als Einrichtung 18 für die Zuführung der Kühlluft sind in einem oberen Abschnitt der Rückwand 21 Öffnungen 22 für die Zuführung der Kühlluft angeordnet. In einem unteren Abschnitt der Rückwand 21 ist mindestens eine Ansaugöffnung mit einem Sauggebläse 23 angeordnet, welche die Einrichtung 19 für die Rückführung der Kühlluft bildet. Die Umlenkung der Luftströme, die aus den Öffnungen 22 in der Rückwand 21 zugeführt werden und nach vorne strömen, erfolgt im Innern des Tabletttransportwagens 1 in einem Freiraum zwischen der Wandfläche des Tabletttransportwagens und dem Rand der zu dieser Wand benachbarten Tabletts. Der Tabletttransportwagen 1 weist doppelwandige, wärmegedämmte Wände auf. Gemäß der Darstellung in Fig. 7 ist in der Innenwand 25 des Tabletttransportwagens eine Vertiefung 26 angeordnet, die der Kühlzone 17 zugeordnet ist und sich im Innenraum des Tabletttransportwagens über alle Etagen erstreckt. Die Vertiefung 26 bildet einen Freiraum für die Umlenkung der Kühlluftströme von oben nach unten.

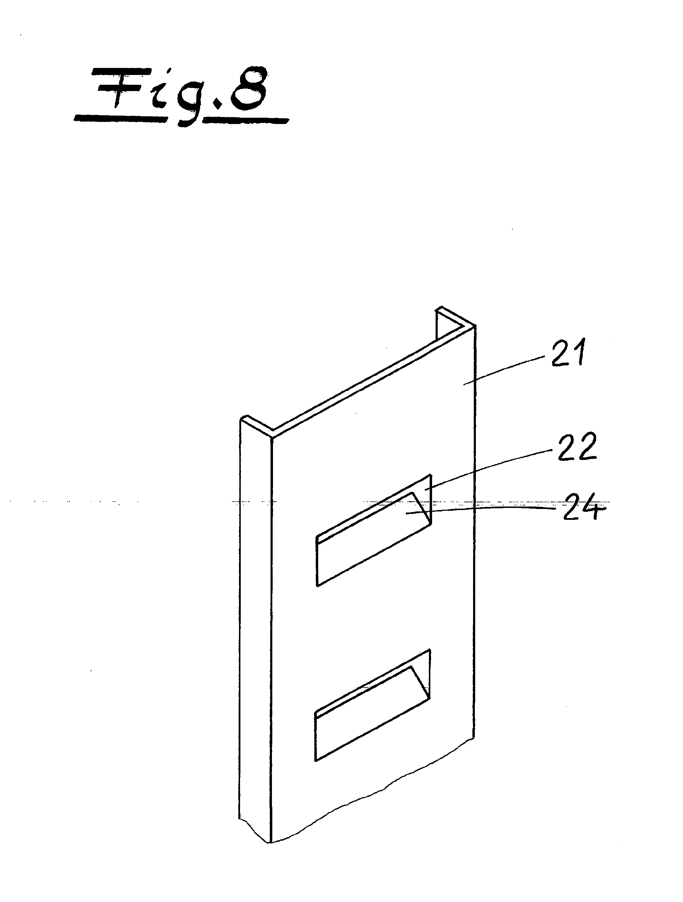

Die an die Kühlzone 17 angrenzende Rückwand 21 des Heizplattenträgers ist abnehmbar und begrenzt getrennte Lufträume für eine Kühlluftzuführung und Kühlluftabführung. Nach Abnahme der Rückwand 21 sind die Lufträume zugänglich und können gereinigt werden. Aus einer vergleichenden Betrachtung der Fig. 5 und 8 geht hervor, dass die Öffnungen 22 für die Kühlluftzuführung als rechteckförmige Fenster ausgebildet sind und jeweils eine nach innen abgewinkelte Zunge 24 aufweisen, welche als Luftleitfläche Kühlluft aus dem rückseitigen Strömungsraum in die Kühlzone 17 umlenkt. Die Zungen 24 sind dabei an den unteren Rand der Fenster angeformt und bewirken eine gleichmäßige Verteilung der rückseitig zugeführten Kühlluft auf die Ebenen, in denen die Tabletts bereitgestellt werden.

## Patentansprüche

1. Vorrichtung zum Regenerieren von Speisen, die auf Tabletts in einem Tabletttransportwagen bereitgestellt werden, mit
einem Rahmen (10),
mehreren übereinander angeordneten Heizplatten (11) mit Induktionsspulen (12) und
einer Kühleinrichtung (14), die eine Kühlfläche und ein Kühlluftgebläse aufweist,
wobei die Heizplatten (11) rückseitig an einen im Rahmen (10) vertikal verstellbar angeordneten Heizplattenträger (13) angeschlossen sind und mittels einer Hubbewegung des Heizplattenträgers (13) gegen die Unterseite der Tabletts (5) eines an die Vorrichtung angedockten Tabletttransportwagens (1) bewegbar sind, **dadurch gekennzeichnet, dass** Trennstege (15) rückseitig an den Heizplattenträger (13) angeschlossen sind, die den Raum innerhalb eines an die Vorrichtung angedockten Tabletttransportwagens (1) in eine Warmzone (16) sowie eine Kühlzone (17) trennen, und dass in der Kühlzone (17) Einrichtungen (18, 19) für eine Zuführung und Rückführung der Kühlluft vorgesehen sind.

2. Vorrichtung nach Anspruch 1, **dadurch gekennzeichnet, dass** die Heizplatten (11) auf den Trennstegen (15) aufliegen.

3. Vorrichtung nach Anspruch 1 oder 2, **dadurch gekennzeichnet, dass** die Einrichtungen (18, 19) für die Zuführung und Rückführung der Kühlluft an den Trennstegen (15) und einer von dem Heizplattenträger (13) gebildeten Rückwand angeordnet sind, so dass sich eine im Wesentlichen horizontale Kühlluftströmung über den sich in die Kühlzone (17) erstreckenden Abschnitt der Tabletts (5) einstellt.

4. Vorrichtung nach einem der Ansprüche 1 bis 3, **dadurch gekennzeichnet, dass** die Trennstege (15) als doppelwandige Elemente ausgebildet sind und jeweils einen Strömungskanal für die Zuführung oder Rückführung der Kühlluft bilden.

5. Vorrichtung nach Anspruch 4, **dadurch gekennzeichnet, dass** die Trennstege (15) an ihrem vorkragenden Ende mindestens eine Öffnung (18) für die Zuführung oder Rückführung der Kühlluft aufweisen.

6. Vorrichtung nach einem der Ansprüche 1 bis 5, **dadurch gekennzeichnet, dass** die doppelwandig ausgebildeten Trennstege (15) entlang ihrer Längserstreckung mehrere Ansaugöffnungen oder Austrittsöffnungen (18) für die Kühlluft aufweisen.

7. Vorrichtung nach einem der Ansprüche 4 bis 6, **dadurch gekennzeichnet, dass** der Heizplattenträger (13) Luftkanäle für die Zuführung und Rückführung der Kühlluft aufweist, wobei einer der Luftkanäle mit dem Strömungsraum der Trennstege (15) in Fluidverbindung steht und ein zweiter Luftkanal durch Öffnungen (19) in der von dem Heizplattenträger (13) gebildeten Rückwand mit der Kühlzone (17) in Fluidverbindung steht.

8. Vorrichtung nach Anspruch 7, **dadurch gekennzeichnet, dass** die Rückwand des Heizplattenträges (13) zusätzliche Absaugöffnungen (19') enthält, welche die Warmzone (16) mit dem zweiten Luftkanal verbinden.

9. Vorrichtung nach Anspruch 1 oder 2, **dadurch gekennzeichnet, dass** die Einrichtungen (18, 19) für die Zuführung und Rückführung von Kühlluft in einer die Kühlzone (17) begrenzenden Rückwand (21) des Heizplattenträgers (13) angeordnet sind, wobei die zugeführte Kühlluft ausgehend von der Luftzuführung (18) an der Rückwand (21) im Wesentlichen horizontal über den in der Kühlzone (17) angeordneten Abschnitt der Tabletts (5) nach vorne strömt und dort nach unten umgelenkt sowie der an der Rückwand (21) angeordneten Einrichtung (19) für die Kühlluftrückführung wieder zugeführt wird.

10. Vorrichtung nach Anspruch 9, **dadurch gekennzeichnet, dass** in einem oberen Abschnitt der Rückwand (21) Öffnungen (22) für die Zuführung der Kühlluft angeordnet sind und dass in einem unteren Abschnitt der Rückwand mindestens eine Ansaugöffnung mit einem Sauggebläse (23) angeordnet ist.

11. Vorrichtung nach Anspruch 9 oder 10, **dadurch gekennzeichnet, dass** die an die Kühlzone (17) angrenzende Rückwand (21) des Heizplattenträgers (13) abnehmbar ist und getrennte Lufträume für eine Kühlluftzuführung und Kühlluftabführung begrenzt.

12. Vorrichtung nach Anspruch 10 oder 11, **dadurch gekennzeichnet, dass** die Öffnungen (22) für die Kühlluftzuführung als rechteckförmige Fenster ausgebildet sind und jeweils eine nach innen abgewinkelte Zunge (24) aufweisen, welche als Luftleitfläche Kühlluft aus einem rückseitigen Strömungsraum in die Kühlzone (17) umlenkt.

13. Vorrichtung nach Anspruch 12, **dadurch gekennzeichnet, dass** die Zungen (24) an den unteren Rand der Fenster (22) angeformt sind.

14. Vorrichtung nach einem der Ansprüche 1 bis 13, **dadurch gekennzeichnet, dass** die Abmessungen der Trennstege (15) und der Stellhub des Heizplattenträgers (13) so aufeinander abgestimmt sind, dass der untere Rand der Trennstege (15) in einen rinnenförmigen Abschnitt (9) der Tabletts (5), der eine Tablettfläche (6) für warme Speisen von einer Tablettfläche (7) für gekühlte Speisen trennt, eintaucht.

15. Vorrichtung nach einem der Ansprüche 1 bis 14, **dadurch gekennzeichnet, dass** die Trennstege (15) an ihrem unteren Rand ein sich verjüngendes Querschnittsprofil aufweisen.

16. Vorrichtung nach einem der Ansprüche 1 bis 15, **dadurch gekennzeichnet, dass** an den Heizplattenträger (13) unterhalb der Heizplattenanordnung ein vorstehender Steg angeschlossen ist, der an seiner Unterseite eine Anlaufschräge (20) aufweist.

17. Vorrichtung nach einem der Ansprüche 1 bis 16, **dadurch gekennzeichnet, dass** die von dem Heizplattenträger (13) vorkragende Länge der Trennstege (15) und der auf ihnen aufliegenden Heizplatten (11) so bemessen ist, dass auf den Heizplatten (11) zwei in einer Ebene hintereinander angeordnete Tabletts (5) Platz finden und darauf angeordnete Speisen gleichzeitig regeneriert werden können.

## Claims

1. A device for regenerating meals that are arranged on trays in a tray transport cart, with
a frame (10),
several heating plates (11) that are arranged on top of one another and feature induction coils (12), and
a cooling device (14) that features a cooling surface and a cooling air fan,
wherein the heating plates (11) are on the rear side connected to a heating plate carrier (13) that is arranged in the frame (10) in a vertically adjustable fashion, and wherein said heating plates can be moved against the underside of the trays (5) of a tray transport cart (1) docked to the device by means of a lifting motion of the heating plate carrier (13), **characterized in that** separating webs (15) are on the rear side connected to the heating plate carrier (13) and separate the space within a tray transport cart (1) docked to the device into a heating zone (16) and a cooling zone (17), and **in that** devices (18, 19) for supplying and returning cooling air are provided in the cooling zone (17).

2. The device according to claim 1, **characterized in that** the heating plates (11) lie on the separating webs (15).

3. The device according to claim 1 or 2, **characterized in that** the devices (18, 19) for supplying and returning the cooling air are arranged on the separating webs (15) and a rear wall formed by the heating plate carrier (13) such that an essentially horizontal cooling air flow is adjusted over the section of the trays (5) extending in the cooling zone (17).

4. The device according to one of claims 1 to 3, **characterized in that** the separating webs (15) are realized in the form of double-walled elements and respectively form a flow channel for supplying or returning the cooling air.

5. The device according to claim 4, **characterized in that** the separating webs (15) feature at least one opening (18) for supplying or returning the cooling air on their projecting end.

6. The device according to one of claims 1 to 5, **characterized in that** the double-walled separating webs (15) feature several suction openings or outlet openings (18) for the cooling air along their longitudinal extent

7. The device according to one of claims 4 to 6, **characterized in that** the heating plate carrier (13) features air channels for supplying and returning the cooling air, wherein one of the air channel is fluidically connected to the flow space of the separating webs (15) and a second air channel is fluidically connected to the cooling zone (17) via openings (19) in the rear wall formed by the heating plate carrier (13).

8. The device according to claim 7, **characterized in that** the rear wall of the heating plate carrier (13) contains additional suction openings (19') that connect the heating zone (16) to the second air channel.

9. The device according to claim 1 or 2, **characterized in that** the devices (18, 19) for supplying and returning cooling air are arranged in a rear wall (21) of the heating plate carrier (13) that defines the cooling zone (17), wherein the supplied cooling air essentially flows forward horizontally from the air supply (18) on the rear wall (21) over the section of the trays (5) arranged in the cooling zone (17) and is then deflected downward, as well as once again supplied to the device (19) for returning the cooling air arranged on the rear wall (21).

10. The device according to claim 9, **characterized in that** openings (22) for supplying the cooling air are arranged in an upper section of the rear wall (21), and **in that** at least one suction opening with an exhaust fan (23) is arranged in a lower section of the rear wall.

11. The device according to claim 9 or 10, **characterized in that** the rear wall (21) of the heating plate carrier (13) bordering on the cooling zone (17) can be removed and defines separated air spaces for the cooling air supply and the cooling air discharge.

12. The device according to claim 10 or 11, **characterized in that** the openings (22) for supplying the cooling air are realized in the form of rectangular windows and respectively feature an inwardly angled tab (24) that deflects cooling air from a flow space on the rear side into the cooling zone (17) in the form of an air guiding surface.

13. The device according to claim 12, **characterized in that** the tabs (24) are integrally formed onto the lower edge of the windows (22).

14. The device according to one of claims 1 to 13, **characterized in that** the dimensions of the separating webs (15) and the stroke of the heating plate carrier (13) are adapted to one another in such a way that the lower edge of the separating webs (15) penetrates into a groove-shaped section (9) of the trays (5) that separates a tray surface (6) for hot meals from a tray surface (7) for refrigerated meals.

15. The device according to one of claims 1 to 14, **characterized in that** the separating webs (15) have a tapered cross-sectional profile on their lower edge.

16. The device according to one of claims 1 to 15, **characterized in that** a projecting web, which features a run-on slope (20) on its underside, is connected to the heating plate carrier (13) underneath the heating plate arrangement.

17. The device according to one of claims 1 to 16, **characterized in that** the length of the separating webs (15) projecting from the heating plate carrier (13) and of the heating plates (11) lying thereon is dimensioned such that two trays (5) arranged behind one another in one plane can be accommodated on the heating plates (11) and meals arranged on these trays can be simultaneously regenerated.

## Revendications

1. Dispositif de régénération de plats posés sur des tablettes d'un chariot de transport de tablettes, comportant
un châssis (10),
plusieurs plaques chauffantes superposées (11) à bobines d'induction (12) et
un dispositif refroidisseur (14) qui présente une surface de refroidissement et une soufflerie d'air de refroidissement,
dans lequel les plaques chauffantes (11) se raccordent par l'arrière à un support de plaques chauffantes (13) disposé de manière à être réglable verticalement dans le cadre (10) et sont mobiles au moyen d'un mouvement de levage du support de plaques chauffantes (13) vers la face inférieure des tablettes (5) d'un chariot de transport de tablettes (1) rattaché au dispositif, **caractérisé en ce que** sont raccordées par l'arrière au support de plaques chauffantes (13) des traverses séparatrices (15) qui divisent l'espace d'un chariot de transport de tablettes (1) rattaché au dispositif en une zone chaude (16) et une zone froide (17) et qu'il est prévu dans la zone froide (17) des dispositifs (18, 19) d'apport et de recyclage de l'air de refroidissement.

2. Dispositif selon la revendication 1, **caractérisé en ce que** les plaques chauffantes (13) reposent sur les traverses séparatrices (15).

3. Dispositif selon la revendication 1 ou 2, **caractérisé en ce que** les dispositifs (18, 19) d'apport et de recyclage de l'air de refroidissement sont disposés au niveau des traverses séparatrices (15) et d'une paroi arrière formée par le support de plaques chauffantes (13), de sorte qu'il s'établit un flux sensiblement horizontal d'air de refroidissement au-dessus de la section s'étendant dans la zone froide (17) de la tablette (5).

4. Dispositif selon une des revendications 1 à 3, **caractérisé en ce que** les traverses séparatrices (15) sont réalisées sous forme d'éléments à double paroi et forment respectivement un canal d'écoulement pour l'apport ou le recyclage de l'air de refroidissement.

5. Dispositif selon la revendication 4, **caractérisé en ce que** les traverses séparatrices (15) présentent à leur extrémité proéminente au moins une ouverture (18) pour l'apport ou le recyclage de l'air de refroidissement.

6. Dispositif selon une des revendications 1 à 5, **caractérisé en ce que** les traverses séparatrices (15) à double paroi présentent le long de leur extension longitudinale plusieurs ouvertures d'aspiration ou ouvertures de sortie (18) pour l'air de refroidissement.

7. Dispositif selon une des revendications 4 à 6, **caractérisé en ce que** le support de plaques chauffantes (13) présente des canaux à air pour l'apport ou le recyclage de l'air de refroidissement, un des canaux à air étant en liaison de fluide avec l'espace d'écoulement des traverses séparatrices (15) et un second canal à air étant en liaison de fluide avec la zone froide (17) par des ouvertures (19) de la paroi formée par le support de plaques chauffantes (13).

8. Dispositif selon la revendication 7, **caractérisé en ce que** la paroi arrière du support de plaques chauffantes (13) contient des ouvertures d'aspiration supplémentaires (19') qui relient la zone chaude (16) au second canal à air.

9. Dispositif selon la revendication 1 ou 2, **caractérisé en ce que** les dispositifs (18, 19) d'apport et de recyclage d'air de refroidissement sont disposés dans une paroi arrière (21) délimitant la zone froide (17) du support de plaques chauffantes (13), l'air de refroidissement apporté s'écoulant sur la paroi arrière (21) vers l'avant sensiblement à l'horizontale au-dessus de la section disposée dans la zone froide (17) de la tablette (5) en partant de l'alimentation en air (18) et y étant dévié vers le bas et reconduit au dispositif (19) de recyclage d'air de refroidissement disposé sur la paroi arrière (21).

10. Dispositif selon la revendication 9, **caractérisé en ce que** des ouvertures (22) pour l'apport d'air de refroidissement sont pratiquées dans une section supérieure de la paroi arrière (21) et qu'au moins une ouverture d'aspiration comportant une soufflerie d'aspiration (23) est pratiquée dans une section inférieure de la paroi arrière.

11. Dispositif selon la revendication 9 ou 10, **caractérisé en ce que** la paroi arrière (21) adjacente à la zone de refroidissement (17) du support de plaques chauffantes (13) est amovible et délimite des espaces d'air séparés pour un apport d'air de refroidissement et une évacuation d'air de refroidissement.

12. Dispositif selon la revendication 10 ou 11, **caractérisé en ce que** les ouvertures (22) pour l'apport d'air de refroidissement se présentent sous forme de fenêtres de forme rectangulaire et présentent respectivement une languette coudée vers l'intérieur (24) qui, en faisant office de surface conductrice d'air, dévie de l'air de refroidissement depuis un espace d'écoulement d'air arrière vers la zone de refroidissement (17).

13. Dispositif selon la revendication 12, **caractérisé en ce que** les languettes (24) sont formées sur le bord inférieur des fenêtres (22).

14. Dispositif selon une des revendications 1 à 13, **caractérisé en ce que** les dimensions des traverses séparatrices (15) et la course de réglage du support de plaques chauffantes (13) sont harmonisées de manière à ce que le bord inférieur des traverses séparatrices (15) qui sépare une surface de tablette (6) pour plats chauds d'une surface de tablette (7) pour plats refroidis plonge dans une section en forme de sillon (9) de la tablette (5).

15. Dispositif selon une des revendications 1 à 14, **caractérisé en ce que** les traverses séparatrices (15) présentent sur leur bord inférieur un profil de section transversale se rétrécissant.

16. Dispositif selon une des revendications 1 à 15, **caractérisé en ce qu'**est raccordée au support de plaques chauffantes (13), en-dessous du dispositif de plaques chauffantes, une traverse proéminente qui présente un biseau d'arrivée (20) sur sa face inférieure.

17. Dispositif selon une des revendications 1 à 16, **caractérisé en ce que** la longueur dépassant du support de plaques chauffantes (13) des traverses séparatrices (15) et des plaques chauffantes (11) reposant dessus est dimensionnée de manière à ce que deux tablettes (5) disposées successivement dans un plan trouvent place sur les plaques chauffantes (11) et que des plats disposés dessus puissent être régénérés en même temps.
